# EUROPEAN PATENT APPLICATION

(11) **EP 1 741 480 A2**
(43) Date of publication of application: **10.01.2007**
(21) Application number: 06013847.6
(22) Date of filing: 04.07.2006
(51) Int. Cl.: B01D 53/94, F01N 3/20

(54) **Apparatus for removing particulate matter**

(30) Priority: 07.07.2005 JP 2005198223
(71) Applicant: HONDA MOTOR CO., Ltd., Tokyo 107-8556 (JP)
(72) Inventor: Tanaami, Kiyoshi, Wako-shi Saitama, 351-0193 (JP); Naka, Takahiro, Wako-shi Saitama, 351-0193 (JP)
(74) Representative: Böhm, Brigitte

(57) **Abstract**

An apparatus for removing particulate matter is provided which is able to lower a temperature to burn particulate matter. The apparatus for removing particulate matter burns and removes the particulate matter emitted from an internal combustion engine, and comprises a perovskite-type complex oxide which is represented by the general formula ABO₃ where B is a metal having a valence of +3 or more. The metal having a valence of +3 or more for B of the general formula comprises at least one metal selected from the group consisting of Ti, Zr, Hf, V, Cr, Mo, W, Mn, Fe, Ru, Co, Ni, Cu, Ag, and Au. The perovskite-type complex oxide comprises at least one complex oxide selected from the group consisting of LaMn(III)O₃, LaSrMn(III)O₃, and LaCo(III)O₃. The perovskite-type complex oxide supports Pt or Pd.

## Description

### BACKGROUND OF THE INVENTION

### Field of the Invention

The present invention relates to an apparatus for removing particulate matter which burns and removes particulate matter emitted from an internal combustion engine.

### Description of the Related Art

Conventionally, an oxidizing catalyst has been used, which is a mixture of refractory support such as alumina supporting a noble metal and oxygen storing material such as cerium oxide (ceria) for promoting oxidation, in order to purify harmful gases such as carbon monoxide (CO), hydrocarbon (HC) and nitrogen oxide (NOₓ) which are emitted from an internal combustion engine such as an automobile engine and the like. Recently, the use of perovskite-type complex oxide also has been proposed to reduce and purify the nitrogen oxide (NOₓ) (for example, see Japanese Patent Laid-Open No. 2001-263051 publication).

Meanwhile, particulate matter (particulate) including carbon, soot, and hydrocarbon (HC) as well as the above harmful gases is emitted from an internal combustion engine such as a diesel engine and the like. The particulate matter is alleged to be the leading cause of air pollution, and the harmfulness of the particulate matter contributing to carcinogenicity and asthma has been singled out. Such particulate matter can be removed by using a filter and the like so that the particulate matter would be collected and burned there.

So, the use of the above perovskite-type complex oxide itself as a catalyst, or the use of the perovskite-type complex oxide of which crystal lattice has Pt or Pd therein as a catalyst have been proposed (for example, see Japanese Patent Laid-Open No. 8-229404 publication and Japanese Patent Laid-Open No. 8-217461 publication).

In order to burn the particulate matter in the air, a high temperature of 500 to 600 ºC is required, and the use of the perovskite-type complex oxide or the perovskite-type complex oxide of which crystal lattice has Pt or Pd therein as a catalyst is considered to allow the temperature to burn the particulate matter to be decreased.

However, because the particulate matter is chemically more stable than the harmful gases, the catalysts cannot provide sufficient effect to decrease the burning temperature, and inconveniently, the purifying apparatus needs to be provided with a higher temperature atmosphere or to be of a larger size. Such a higher temperature atmosphere for the purifying apparatus in turn requires a catalyst which is highly durable, and the purifying apparatus of a larger size causes a disadvantage of mounting a large apparatus onto a movable body such as automobile.

### SUMMARY OF THE INVENTION

The present invention is made to overcome the above disadvantages, and one object of the present invention is to provide an apparatus for removing particulate matter which is able to decrease a combustion temperature of the particulate matter.

The inventors of the present invention have carefully studied the reason why the conventional perovskite-type complex oxide or the catalyst of which crystal lattice has Pt or Pd cannot sufficiently decrease the combustion temperature of the particulate matter. As a result, the inventors of the present invention found that the conventional perovskite-type complex oxide including an element having a valence of +2 as a metal for B of the general formula ABO₃ cannot provide a sufficient oxygen releasing capacity.

The inventors of the present invention have conducted a further study based on the knowledge above described, and found that perovskite-type complex oxide including an element having a valence of +3 as a metal for B of the general formula ABO₃ can provide better oxygen releasing capacity, which leaded to the present invention.

Therefore, in order to achieve the above object, the present invention provides an apparatus for removing particulate matter which burns and removes particulate matter emitted from an internal combustion engine, comprising a perovskite-type complex oxide which is represented by the general formula ABO₃ where B is a metal having a valence of +3 or more.

An apparatus for removing particulate matter according to the present invention comprises a perovskite-type complex oxide which is represented by the general formula ABO₃ where B is a metal having a valence of +3 or more, and the perovskite-type complex oxide can provide better oxygen releasing capacity than a conventional perovskite-type complex oxide including a metal having a valence of +2 for B.

A perovskite-type complex oxide used in an apparatus for removing particulate matter according to the present invention preferably includes at least one selected from the group consisting of Ti, Zr, Hf, V, Cr, Mo, W, Mn, Fe, Ru, Co, Ni, Cu, Ag, Au as a metal having a valence of +3 or more for B of the general formula to provide an excellent oxygen releasing capacity.

The perovskite-type complex oxide has an excellent oxygen releasing capacity as described above, and can burn particulate matter including carbon, soot, hydrocarbon (HC) and the like at a temperature which is lower than a temperature conventionally required, by taking the advantage of supporting Pt or Pd.

### BRIEF DESCRIPTION OF THE DRAWINGS

FIG. 1 is a graph to show oxygen releasing capacity of a perovskite-type complex oxide which is used in an apparatus for removing particulate matter according to the present invention;
FIG. 2 is a graph to show oxygen releasing capacity of a perovskite-type complex oxide which is used in an apparatus for removing particulate matter according to the present invention;
FIG. 3 is a graph to show oxygen releasing capacity of a perovskite-type complex oxide which is used in an apparatus for removing particulate matter according to the present invention; and
FIG. 4 is a graph to show oxidization characteristics of a platinum supporting perovskite-type complex oxide which is used in an apparatus for removing particulate matter according to the present invention.

### DETAILED DESCRIPTION OF THE PREFERRED EMBODIMENTS

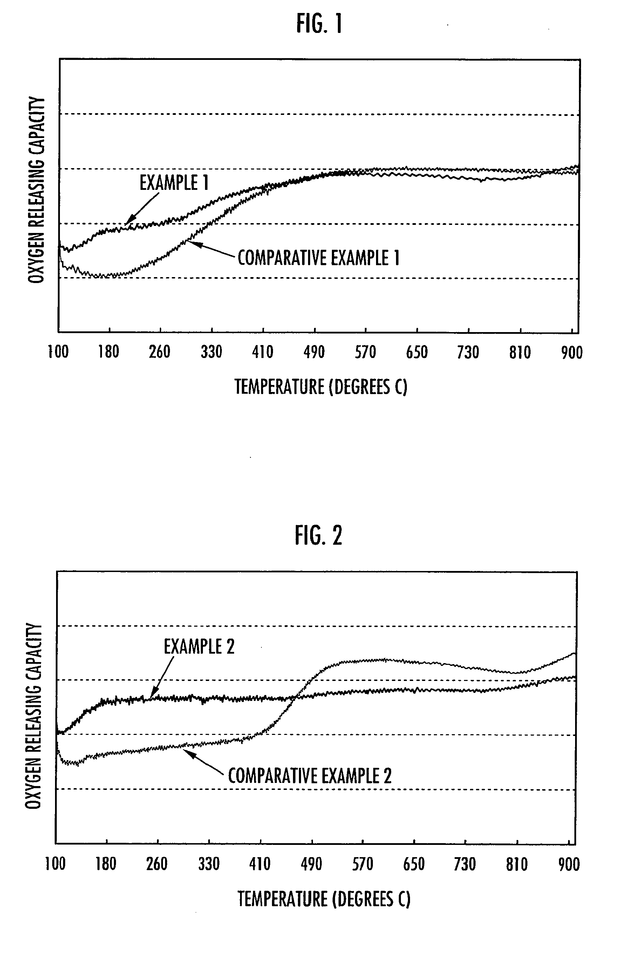

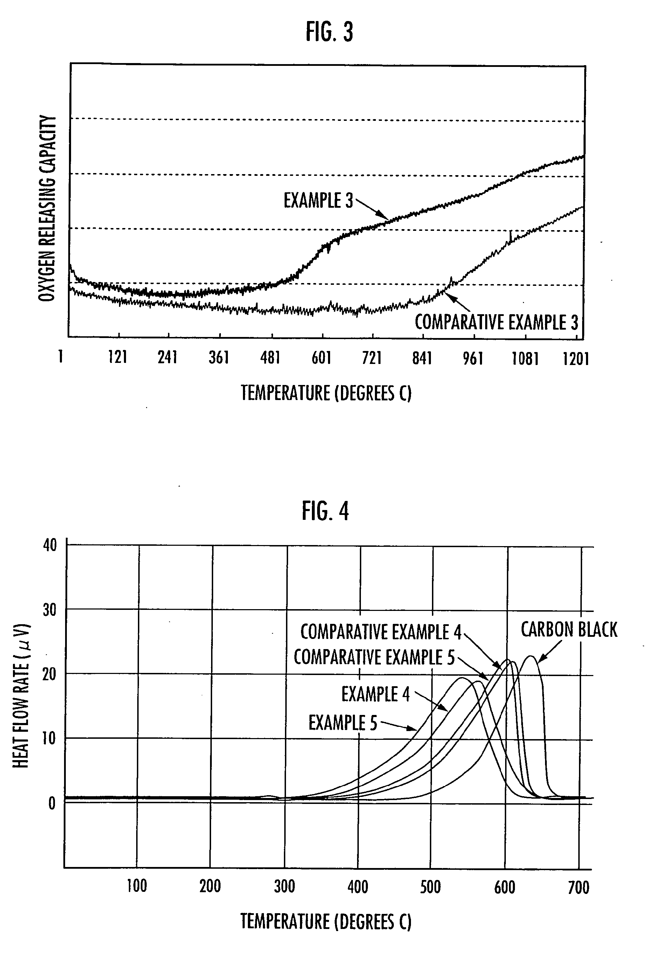

Now, embodiments of the present invention will be explained in detail with reference to the accompanying drawings. FIGS. 1 to 3 are graphs to show oxygen releasing capacity of a perovskite-type complex oxide which is used in an apparatus for removing particulate matter according to the present invention, and FIG. 4 is a graph to show oxidization characteristics of a platinum supporting perovskite-type complex oxide which is used in an apparatus for removing particulate matter according to the present invention.

An apparatus for removing particulate matter of this embodiment burns and removes particulate matter (particulate) including carbon, soot, hydrocarbon (HC) in exhaust gas emitted from an internal combustion engine of automobile engines and the like, and comprises a perovskite-type complex oxide which is represented by the general formula ABO₃ where B is a metal having a valence of +3 or more.

The perovskite-type complex oxide may include La, Ba, or Sr as the metal for A of the general formula. The A may include one metal, or two or more different metals.

The perovskite-type complex oxide preferably include a metal having a valence of +3 or more for B of the general formula selected from the group consisting of Ti, Zr, Hf, V, Cr, Mo, W, Mn, Fe, Ru, Co, Ni, Cu, Ag, and Au. The B may include one metal, or two or more different metals, and when B includes two or more different metals, at least one of the metals should have a valence of +3 or more.

The perovskite-type complex oxide can be synthesized by mixing a predetermined amount of the salt or oxide of a metal for A and a predetermined amount of the salt or oxide of a metal for B, and heating and firing the mixture. The salt may be nitrate or the like, for example.

In the apparatus for removing particulate matter of this embodiment, the perovskite-type complex oxide supports a noble metal such as Pt and Pd as an oxidizing catalyst. The oxidizing catalyst may be simply supported on a surface of the perovskite-type complex oxide, but in this case, while being used at a high temperature, the noble metal tends to concentrate and its dispersion is decreased, thereby the catalyst activity may deteriorate. Thus, the oxidizing catalyst is preferably taken in crystal lattice of the perovskite-type complex oxide to be supported therein.

The perovskite-type complex oxide may be preformed in a shape of pellet, honeycomb, or the like to support the oxidizing catalyst, depending on a shape of the apparatus for removing particulate matter.

Now, Examples and Comparative Examples of the present invention will be described below.

### [Example 1]

First, in this example, equimolar quantities of lanthanum nitrateandmanganese(III)nitrate,andfour-foldmolarexcess of urea of a metal salt were dissolved in a small amount of water, and the solution was poured into a porcelain pot for a primary firing for two hours at 350 ºC and further a secondary firing for one hour at 1000 ºC, which resulted in a perovskite-type complex oxide represented by LaMn(III)O₃. Next, the temperature of the resulting perovskite-type complex oxide of this example was raised from an ambient temperature to 900 ºC at the rate of 10 0C/minute in a vacuum of 1.33 x 10⁻⁵ Pa, and oxygen releasing capacity of the oxide was measured. The oxygen releasing capacity was determined, by measuring the oxygen which was desorbed during the above raise of temperature as a mass spectrum intensity of a mass-to-charge ratio (m/z) = 32 with a mass analyzer. The result is shown in FIG. 1.

### [Comparative Example 1]

First, in this comparative example, a perovskite-type complex oxide which is represented by LaMn(II)O₃ was obtained in the same manner as in Example 1 except that manganese (II) nitrate was used instead of manganese (III) nitrate. Next, the oxygen releasing capacity of the resulting perovskite-type complex oxide in this comparative example was measured in the same manner as in Example 1. The result is shown in FIG. 1.

### [Example 2]

First, in this example, equimolar quantities of lanthanum nitrate, manganese (III) nitrate and strontium nitrate, and four-fold molar excess of urea of a metal salt were dissolved in a small amount of water, and the solution was poured into a porcelain pot for a primary firing for two hours at 350 ºC and further a secondary firing for one hour at 1000 ºC, which resulted in a perovskite-type complex oxide represented by LaSrMn(II)O₃. Next, the oxygen releasing capacity of the resulting perovskite-type complex oxide in this example was measured in the same manner as in Example 1. The result is shown in FIG. 2.

### [Comparative Example 2]

First, in this comparative example, a perovskite-type complex oxide which is represented by LaSrMn (II) O₃ was obtained in the same manner as in Example 2 except that manganese (II) nitrate was used instead of manganese (III) nitrate. Next, the oxygen releasing capacity of the resulting perovskite-type complex oxide in this comparative example was measured in the same manner as in Example 1. The result is shown in FIG. 2.

### [Example 3]

First, in this example, equimolar quantities of lanthanum nitrate and cobalt (III) nitrate, and four-fold molar excess of urea of a metal salt were dissolved in a small amount of water, and the solution was poured into a porcelain pot for a primary firing for two hours at 350 ºC and further a secondary firing for one hour at 1000 ºC, which resulted in a perovskite-type complex oxide represented by LaCo(III)O₃. Next, the oxygen releasing capacity of the resulting perovskite-type complex oxide in this example was measured in the same manner as in Example 1. The result is shown in FIG. 3.

### [Comparative Example 3]

First, in this comparative example, a perovskite-type complex oxide which is represented by LaCo(II)O₃ was obtained in the same manner as in Example 2 except that cobalt (II) nitrate was used instead of cobalt (III) nitrate. Next, the oxygen releasing capacity of the resulting perovskite-type complex oxide in this comparative example was measured in the same manner as in Example 1. The result is shown in FIG. 3.

FIG. 1 and FIG. 2 clearly show that LaMn(III)O₃ and LaSrMn(III)O₃ have better oxygen releasing capacity than LaMn(II)O₃ and LaSrMn(II)O₃ in a range of lower temperatures. Also, FIG. 3 clearly shows that LaCo(III)O₃ has better oxygen releasing capacity than LaCo(II)O₃ in the whole measured range of temperatures.

### [Example 4]

First, in this example, the resulting perovskite-type complex oxide in Example 1 was dispersed in a chloroplatinic acid solution, which was then evaporated and dried. The solid after evaporation and drying was subjected to a firing for two hours at 600 ºC in the air for preparing a platinum supporting perovskite-type complex oxide. Next, the resulting platinum supporting perovskite-type complex oxide in this example was mixed with carbon black at a weight ratio of 20:1, and the temperature of the mixture was raised from an ambient temperature to 800 ºC at the rate of 10 ºC/minute in an atmospheric environment. The heat flow rate during the raise of the temperature was measured, and the oxidization characteristics of the oxide was evaluated by comparing the peak heat flow rate to the peak combustion temperature of the carbon black. The result is shown in FIG. 4.

### [Example 5]

First, in this example, a platinum supporting perovskite-type complex oxide was prepared in the same manner as in Example 4 except that the perovskite-type complex oxide obtained in Example 2 was used. Next, the oxidization characteristics of the resulting platinum supporting perovskite-type complex oxide in this example was evaluated in the same manner as in Example 4. The result is shown in FIG. 4.

### [Comparative Example 4]

First, in this comparative example, a platinum supporting perovskite-type complex oxide was prepared in the same manner as in Example 4 except that the perovskite-type complex oxide obtained in Comparative Example 1 was used. Next, the oxidization characteristics of the resulting platinum supporting perovskite-type complex oxide in this comparative example was evaluated in the same manner as in Example 4. The result is shown in FIG. 4.

### [Comparative Example 5]

First, in this Comparative Example, a platinum supporting perovskite-type complex oxide was prepared in the same manner as in Example 4 except that the perovskite-type complex oxide obtained in Comparative Example 2 was used. Next, the oxidization characteristics of the resulting platinum supporting perovskite-type complex oxide obtained in this Comparative Example was evaluated in the same manner as in Example 4. The result is shown in FIG. 4.

FIG. 4 clearly shows that the platinum supporting LaMn(III)O₃ and LaSrMn(III)O₃ have lower heat flow rates than those of LaMn(II)O₃ and LaSrMn(II)O₃ relative to the peak combustion temperature of carbon black.

An apparatus for removing particulate matter is provided which is able to lower a temperature to burn particulate matter. The apparatus for removing particulate matter burns and removes the particulate matter emitted from an internal combustion engine, and comprises a perovskite-type complex oxide which is represented by the general formula ABO₃ where B is a metal having a valence of +3 or more. The metal having a valence of +3 or more for B of the general formula comprises at least one metal selected from the group consisting of Ti, Zr, Hf, V, Cr, Mo, W, Mn, Fe, Ru, Co, Ni, Cu, Ag, and Au. The perovskite-type complex oxide comprises at least one complex oxide selected from the group consisting of LaMn(III)O₃, LaSrMn(III)O₃, and LaCo(III)O₃. The perovskite-type complex oxide supports Pt or Pd.

## Claims

1. An apparatus for removing particulate matter which burns and removes particulate matter emitted from an internal combustion engine, comprising:
a perovskite-type complex oxide which is represented by the general formula ABO₃ where B is a metal having a valence of +3 or more.

2. The apparatus for removing particulate matter according to claim 1, wherein the metal having a valence of +3 or more for B of the general formula comprises at least one metal selected from the group consisting of Ti, Zr, Hf, V, Cr, Mo, W, Mn, Fe, Ru, Co, Ni, Cu, Ag, and Au.

3. The apparatus for removing particulate matter according to claim 1, wherein the perovskite-type complex oxide comprises at least one complex oxide selected from the group consisting of LaMn(III)O₃, LaSrMn(III)O₃, and LaCo(III)O₃.

4. The apparatus for removing particulate matter according to claim 1, wherein the perovskite-type complex oxide supports Pt or Pd.
